# FASCICULE DE BREVET EUROPEEN

(11) **EP 2 881 839 B1**
(45) Date de publication et mention de la délivrance du brevet: **23.03.2022**
(21) Numéro de dépôt: 14195809.0
(22) Date de dépôt: 02.12.2014
(51) Int. Cl.: G06F 1/324, G06F 1/3296, G06F 1/3206, G06F 9/48

(54) **Procédé de gestion des ressources de calcul d'applications logicielles**
Verfahren zur Rechnerressourcenverwaltung für Softwareanwendungen
Method of managing processing resources for software applications

(30) Priorité: 03.12.2013 FR 1302805
(43) Date de publication de la demande: 10.06.2015
(73) Titulaire: Thales, 92400 Courbevoie (FR)
(72) Inventeur: Bourdellès, Michel, 92622 Gennevilliers Cedex (FR); Marechal, Julien, 92622 Gennevilliers Cedex (FR)
(74) Mandataire: Marks & Clerk France

(56) Documents cités:
- EP-A1- 1 691 286
- EP-A1- 2 275 903
- EP-A2- 0 992 876
- EP-A2- 1 496 424
- FR-A1- 2 969 776
- US-A1- 2002 083 355
- US-A1- 2005 108 075
- US-A1- 2007 136 615
- US-A1- 2007 234 091
- US-A1- 2007 245 317
- US-A1- 2009 049 314
- US-A1- 2010 185 882
- US-A1- 2013 290 751

## Description

L'objet de l'invention concerne un procédé de monitorage pour gérer les ressources de calcul d'applications logicielles, notamment la consommation énergétique de fonctionnement d'un processeur en utilisant un mécanisme de variations du couple tension - fréquence. Une implantation de ce mécanisme est connue sous l'abréviation anglo-saxonne DVFS (Dynamic Voltage and Frequency Scaling) et implantée sur des processeurs du marché. L'invention s'applique notamment à déterminer les besoins de charge des ressources de calcul d'une application s'exécutant sur un équipement composé d'unités de calcul (par exemple des processeurs) et à agir en conséquence sur les changements de paliers de fréquence de ces unités de calcul. L'invention s'applique, par exemple, sur les applications pour lesquelles il est possible de déterminer, pour chaque élément logiciel actif (par exemple processus ou tâche) de l'application exploitant les ressources d'unités de calcul les facteurs de déclenchement, les critères de terminaison associés ainsi que des éléments sur les échéances de ces facteurs d'activation (périodicité, criticité).

L'utilisation des nouvelles capacités de type DVFS permet d'adapter la tension d'un processeur en fonction du besoin. Son application actuelle sur des protocoles radio est confrontée notamment aux contraintes suivantes: la prise en compte du temps de réaction entre les passages de faible et de forte consommation d'énergie qui se révèle trop important sur certains paliers, la gestion de traitements avec échéances et criticité temps réel variables, l'identification des échéances à partir desquelles il est possible de gérer la fréquence, la difficulté de prédiction à des variations dynamique de l'exploitation des ressources de la plateforme par les logiciels tels que la création, la suppression et la migration d'éléments logiciels sur les éléments de la plateforme.

Les solutions antérieures connues du demandeur nécessitent, soit un traitement où la valeur de la fréquence est fixe par forme d'onde, connu sous l'expression « gros grain » ; soit une connaissance fine des traitements, par exemple la durée d'exécution au pire cas appelée WCET (Worst Case Execution Time) estimée pour chaque exécution; soit une gestion intégrée à un ordonnanceur; soit une gestion ne prenant pas en compte les exigences de criticités d'échéances d'applications logicielles.

Le brevet KR20060001509 décrit un procédé pour minimiser la consommation de puissance en temps réel qui implique l'utilisation d'un ordonnanceur spécifique intégrant des gestions de priorité. Cette approche n'est pas adaptée pour les applications dans lesquelles on ne connait pas l'ordonnanceur.

Le brevet FR 2 969 776 concerne un procédé de gestion de la consommation énergétique d'une application donnée exécutée sur un ensemble de processeurs. Ce procédé nécessite la connaissance fine des temps sur des traitements exhaustifs des tâches de l'application.

Le brevet EP 2 275 903 concerne un procédé de gestion dynamique de la consommation d'un processeur.

Les procédés de type *Ondemand Governor* décrits dans le document [http://www.linuxsymposium.org/archives/OLS/Reprints-2006/ Pallipadi-repint.pdf] ne prennent pas en compte la tenue des échéances critiques d'applications temps-réels.

La demande de brevet US2009/049314 décrit un procédé pour contrôler la puissance consommée dans lequel on ajuste la fréquence d'une horloge lorsque l'on détecte une variation dans l'utilisation de la ressource et lorsque cette variation dépasse une valeur seuil donnée.

Il existe donc à l'heure actuelle le besoin de disposer de procédé et de dispositif, permettant d'être implémentés sans connaître l'ordonnanceur utilisé, de générer automatiquement un moniteur de puissance à partir d'une vue structurelle sans prérequis sur les comportements de la cible.

L'invention concerne un procédé de monitorage du niveau de capacité de calcul alloué à une plateforme matérielle pour l'exécution d'une application logicielle en identifiant les situations pour lesquelles il est possible de limiter la consommation en énergie d'un processeur lors de l'exécution d'applications.

La présente invention est définie par les revendications indépendantes jointes auxquelles il convient de se référer. Des caractéristiques avantageuses sont exposées dans les revendications dépendantes.
- La figure 1, un exemple d'architecture système pour la mise en œuvre de l'invention,
- La figure 2, un exemple d'exécution des étapes du procédé selon l'invention.

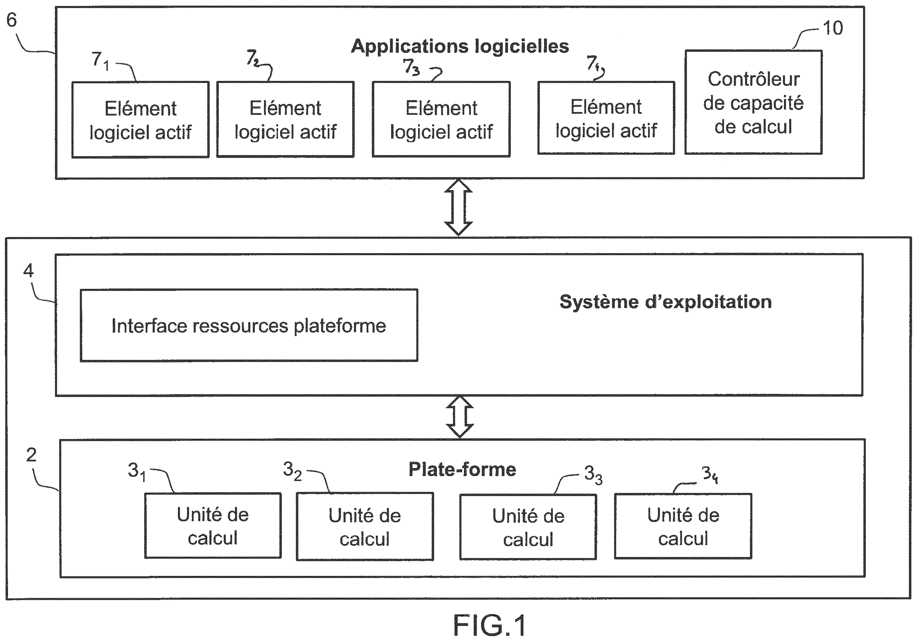

La figure 1 représente un exemple d'architecture système permettant l'exécution du procédé selon l'invention. L'objet de l'invention concerne un procédé de monitorage du niveau de tension - fréquence sur une plateforme matérielle en identifiant les situations pour lesquelles il est possible de limiter la consommation lors de l'exécution d'applications temps réelles.

Le système 1 comprend une plateforme matérielle 2 comprenant par exemple plusieurs unités de calcul 3i, 3₁, 3₂, 3₃, 3₄, telles qu'un processeur ou un cœur de processeurs. Chaque unité de calcul 3i offre des ressources d'exécution. Une des ressources d'exécution est la capacité de calcul. La capacité de calcul de la plateforme est fonction de la fréquence de traitements atomiques et du temps à exécuter des traitements atomiques d'une application logicielle qui va être exécutée.

Un ensemble de capacités logiciel, par exemple un système d'exploitation 4, est déployé sur la plateforme, afin de permettre l'exploitation des ressources de la plateforme par des applications logicielles. Cet ensemble de capacités logiciels offre notamment un service de gestion de l'heure, ainsi que des mécanismes de contrôle de la consommation des unités de calcul par exemple en offrant une capacité de faire varier les paliers de couple tension-fréquence. Une application logicielle peut affecter à l'unité de calcul un niveau de palier de tension-fréquence prédéfini en utilisant une fonction du système d'exploitation. Selon que les valeurs de palier du couple tension-fréquence affectées à une unité de calcul, sont de petite valeur ou de grande valeur, elles correspondent à des valeurs de couple tension-fréquence faible ou haute. Une affectation d'un niveau bas à un niveau haut correspond à remonter le niveau de fréquence de l'unité de calcul. Une affectation d'un niveau haut à un niveau bas correspond à baisser le niveau de fréquence de l'unité de calcul.

Les applications logicielles 6 sont composées, par exemple, d'un ensemble d'éléments logiciels actifs 7j, 7₁, 7₂, 7₃, 7₄ (tels que des processus ou des tâches) déployés sur les unités de calcul 3i de la plateforme matérielle 2. Cet ensemble d'éléments logiciels actifs peut être, soit déterminé statiquement lors d'une phase initiale des traitements de l'application, soit créé et détruit de manière dynamique pendant l'exécution de l'application composée des éléments logiciels actifs. Ces éléments logiciels peuvent partager la ressource d'une même unité de calcul, en respectant une politique d'accès à cette ressource (par exemple politique d'ordonnancement). Ces éléments logiciels actifs utilisent les capacités de calcul des unités de calcul 3i de la plateforme matérielle 2 à la réception de facteurs de déclenchement.

L'invention vise notamment à intégrer un élément logiciel actif supplémentaire, appelé contrôleur de capacité de calcul 10, à déployer sur une des unités des calculs 3i de la plateforme. Le contrôleur de capacité de calcul 10 a notamment la capacité d'agir sur les niveaux de fréquence et de tension des unités de calcul de l'application. Le contrôleur de capacité de calcul 10 reçoit en un temps maximum estimable tₘₐₓ, l'information I_{rfd} de réception des facteurs de déclenchement F_{d} des autres éléments logiciels actifs, l'information Iₜ de terminaison attachée aux facteurs de déclenchement, ainsi que les prochaines échéances E et criticité C de ces échéances. Une échéance E est définie comme critique si le niveau de couple tension-fréquence V_{fe} du processeur doit être à une valeur minimale Vₘᵢₙ dès la réception du facteur de déclenchement de l'échéance.

L'échéance E peut être périodique, apériodique ou sporadique. Une échéance apériodique est une échéance que l'on ne peut prévoir. Une échéance sporadique assure un temps minimal entre deux échéances. Une échéance périodique assure une durée entre deux déclenchements des facteurs de déclenchement égale à une période connue, avec une variation faible de cette durée au regard de la période. A la réception de ces informations, I_{rfd}, Iₜ, F_{d}, E, C, le contrôleur de capacité de calcul fait varier le couple tension-fréquence des unités de calcul de la plateforme. Lorsque le contrôleur reçoit l'indication de fin de traitement de tous les éléments logiciels actifs, le contrôleur de capacité de calcul teste si le temps entre deux informations de déclenchement est suffisant, en utilisant une valeur seuil Sₜ, et si oui, il va baisser le niveau du couple tension-fréquence. Lors de la réception de facteur de déclenchement des applications logicielles, le contrôleur de capacité de calcul va regarder le niveau de criticité des applications logicielles et va activer les applications critiques. Pour les applications logicielles non critiques, le contrôleur de capacité de calcul remonte le niveau du couple tension-fréquence. Une fin de traitement d'un élément logiciel actif est la fin de traitement attaché à une échéance particulière de cet élément logiciel.

Le contrôleur de capacité de calcul affecte, par exemple, un couple tension-fréquence avec la valeur de fréquence haute Fₕₐᵤₜ assurant la tenue des échéances critiques lorsqu'au moins un des logiciels actifs de l'application réalise une activité suite à la réception d'un facteur de déclenchement F_{d}. Lorsqu'aucun logiciel actif de l'application n'est en cours de réaction suite à la réception d'un facteur déclenchant, le contrôleur de capacité de calcul affecte les unités de calcul 3i au niveau nécessaire (couple tension-fréquence) pour les traitements des capacités logicielles déployées pour l'exploitation des ressources de la plate-forme. En cas d'échéance de facteur de déclenchement périodique et critique, la demande d'affectation de fréquence est réalisée par le contrôleur de capacité en avance, d'une valeur de temps au moins égale à la latence de l'unité de calcul de la plateforme concernée par le changement de fréquence demandé. Un enrichissement des informations disponibles au contrôleur de capacité de calcul permet d'affiner ce comportement initial.

Une autre manière de procéder pour le contrôleur de capacité de calcul consiste à moduler le couple tension-fréquence à affecter en cas de connaissance, même partielle, du besoin maximal de nécessité de capacité de calcul pour certains éléments logiciels actifs de l'application, suite à une évaluation a priori de la tenue des échéances de l'application globale, c'est-à-dire une application hors système d'exploitation composée de l'ensemble des éléments logiciels actifs, avec les variations de couples tension-fréquence.

Une autre variante de mise en œuvre pour le contrôleur de capacité de calcul consiste à moduler le couple tension-fréquence en fonction des facteurs de déclenchement, avec la connaissance du besoin maximal de nécessité de capacité de calcul attaché à chacun des facteurs de déclenchement, et une évaluation a priori de la tenue des échéances de l'application globale avec ces variations de couples tension-fréquence.

Un exemple d'algorithme du contrôleur de capacité de calcul est explicité ci-après.

### Itérer {

**Tant que** ((non réception de facteur de déclenchement des éléments logiciels actifs)
**ou (**fin de traitement de tous les éléments logiciels actifs)
**ou (**non réception de déclenchement de réveil à une échéance critique *-* (*moins*) temps de latence de changement de fréquence des unités de calculs attachée à l'unité de calcul)
**ou** (mise à jour des éléments logiciels actifs)) **rester en attente.**
   **(1) Si** (mise à jour des éléments logiciels actifs) **mettre à jour les éléments logiciels actifs.**
      **Fin Si**
   **(2) Si** ((fin de traitement de tous les éléments logiciels actifs)) **Si** (temps suffisant pour baisser le palier de couple tension-fréquence) **baisser le niveau du couple tension-fréquence. FinSi**
      **FinSi**
   **(3) Si (**réception de facteur de déclenchement des éléments logiciels actifs)
      **Si (**Elément logiciel actif critique**) armer le réveil pour les tâches critiques périodiques.**
         **FinSi**
      **Si (**Elément logiciel actif non critique) et (niveau de fréquence bas**)) remonter le niveau du couple tension-fréquence.**
         **FinSi**
      **FinSi**
   **(4) Si ((**réception de déclenchement de réveil à une échéance critique - (*moins*) temps de latence de changement de fréquence des unités de calculs attachée à l'élément de logiciel actif attaché à l'échéance**) et ((**niveau du couple tension-fréquence bas)) **remonter le niveau du couple tension-fréquence.**
      **FinSi**

### } Fin itérer

Dans le cas **(2)**, il est à noter que le test peut être effectué une seule fois sur la durée de période où tous les logiciels actifs ont terminé. Ce test sera rendu à nouveau possible après un passage dans le cas **(3)**.

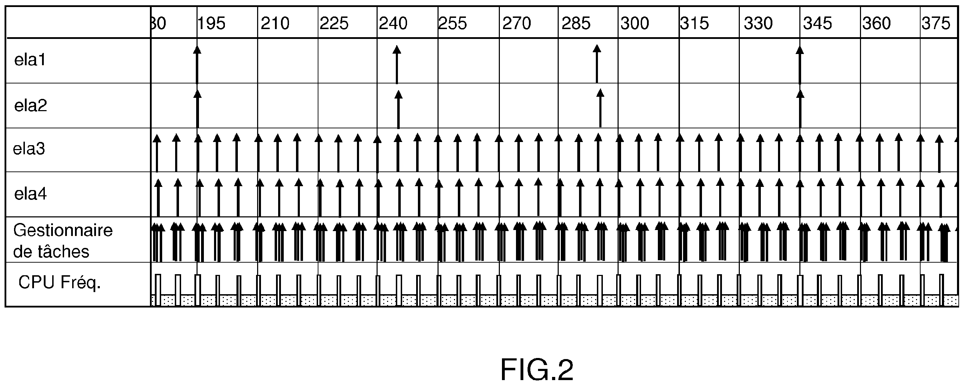

La figure 2 donne un exemple de mise en œuvre du procédé pour un cas composé de 4 éléments logiciels actifs (ela1, ela2, ela3 et ela4). Ces éléments sont de type périodique critique, de périodes 50msec pour ela1 et ela2, et 5 ms pour ela3 et ela4. Les facteurs de déclenchement des éléments logiciels actifs sont des déclenchements de minuteurs, capturés par les éléments logiciels actifs et par le contrôleur de capacité de calcul. L'armement et déclenchement du réveil avant une échéance critique par le contrôleur de capacité de calcul sont aussi gérés par un minuteur. La fin de traitement des tâches correspond à la fin du traitement déclenché à la réception de l'échéance du minuteur courant sur lequel ils sont cadencés et renseignés au contrôleur de capacité de calcul dans une zone mémoire accessible par celui-ci non représentée sur la figure.

Sur une carte avec cible multi-cœur ARM Cortex A9, les niveaux de couples tension-fréquence sont par exemple (0.95v ; 400Mhz),(1.15v ; 800Mhz) et (1.25v ; 1Ghz).

Sans sortir du cadre de l'invention, le procédé pourrait s'appliquer pour plusieurs contrôleurs de capacité de calcul.

Sans sortir du cadre de l'invention, le procédé s'applique au mécanisme précité DVFS, ou DPM (Dynamic Power Management) de performance variable sans modification, ou à tout autre mécanisme permettant de contrôler les ressources de la plate-forme. Il s'applique sur tous types d'architectures parallèles et/ou hétérogènes, à tous types de gestion de l'ordonnancement des composants logiciels actifs, aux applications avec création et destruction dynamique de composants logiciels actifs.

Le procédé s'applique aussi aux applications avec migration de composants logiciels actifs.

Le procédé selon l'invention offre notamment les avantages suivants :
- la gestion du monitorage DVFS sur paliers de temps variables sur stimuli périodiques ou sporadiques à échéance et criticités variables,
- la garantie de tenue des échéances quoiqu'il arrive, même après modification a posteriori des comportements, si celles-ci étaient tenus avant application du procédé.
- il ne nécessite pas la connaissance fine des traitements pour le monitorage des fréquences, ni de connaissances supplémentaires de la part des logiciels,
- il y a dissociation du traitement des niveaux de fréquence au développement de l'application.
- Les applications candidates à être contrôlées peuvent exploiter toutes les ressources de la plateforme. Les applications peuvent notamment jouer sur le niveau de couple tension-fréquence, ordonnancement des tâches à exécuter, la création, la suppression et la migration de tâches.

## Revendications

1. - Procédé de monitorage du niveau de capacité de calcul alloué à une plateforme matérielle (2) comprenant au moins une unité de calcul (3i) sur laquelle va s'exécuter plusieurs applications logicielles (6) composées d'éléments logiciels actifs (7j), un contrôleur de capacité de calcul (10), ledit contrôleur de capacité de calcul (10) ayant la capacité d'agir sur un niveau de couple tension-fréquence de ladite unité de calcul (3i), **caractérisé en ce que** ledit procédé comporte au moins les étapes suivantes:
a) Le contrôleur de capacité de calcul 10 reçoit en un temps maximum estimable tₘₐₓ, une information I_{rfd} de réception de facteurs de déclenchement F_{D} d'échéances E d'éléments logiciels actifs (7j),
b) le contrôleur de capacité de calcul (10) reçoit une information Iₜ de terminaison attachée aux facteurs de déclenchement F_{D}, des prochaines échéances E des éléments logiciels actifs (7j) des applications logicielles (6) et une criticité de ces échéances E, chaque échéance E étant définie comme critique si un niveau du couple tension-frequence V_{fe} de l'unité de calcul (3i) doit être à une valeur minimale Vₘᵢₙ dès la réception d'un facteur de déclenchement F_{D} de ladite échéance E,
c) lorsque le contrôleur de capacité de calcul (10) reçoit une indication de fin de traitement de tous les éléments logiciels actifs (7j), c1) ledit contrôleur (10) teste si un temps entre deux informations de déclenchement est suffisant en utilisant une valeur seuil Sₜ, c2) si oui le contrôleur de capacité de calcul (10) va baisser le niveau du couple tension-fréquence de l'unité de calcul (3i),
d) lors de la réception de facteurs de déclenchement F_{D} des applications logicielles (6), le contrôleur de capacité de calcul (10) va regarder les criticités C des échéances E des éléments logiciels actifs (7) des applications logicielles (6) et va activer les applications logicielles critiques, pour les applications logicielles non critiques le contrôleur de capacité de calcul (10) remonte le niveau du couple tension-fréquence de l'unité de calcul (3i), et **en ce que** les applications logicielles sont à échéance périodique et **en ce que** l'on réalise une demande d'affectation du couple tension-fréquence en avance d'un temps au moins égal à une latence de l'unité de calcul (3i) concernée pour réaliser ledit changement.

2. - Procédé selon la revendication 1 **caractérisé en ce que** le contrôleur de capacité de calcul module la fréquence en tenant compte d'un besoin maximal de nécessité de capacité de calcul attaché à chacun des facteurs de déclenchement des applications logicielles et une évaluation a priori de la tenue des échéances de l'application globale avec ces variations de fréquence.

3. - Procédé selon l'une des revendications précédentes **caractérisé en ce que** dans le cas où aucune des applications logicielles n'est en cours de traitement, le contrôleur va affecter les unités de calcul au niveau tension-fréquence minimum pour les traitements propres à l'exploitation.

4. - Programme d'ordinateur comprenant des instructions qui, lorsque ledit programme est exécuté par un ordinateur, conduisent celui-ci à mettre en œuvre les étapes du procédé de la revendication 1.

5. - Utilisation du procédé selon l'une des revendications 1 à 3 à des mécanismes de type Dynamic Voltage and Frequency Scaling, DVFS, ou Dynamic Power Management, DPM.

## Patentansprüche

1. Verfahren zum Monitoring des einer Hardware-Plattform (2) zugewiesenen Rechenkapazitätsniveaus, umfassend mindestens eine Recheneinheit (3i), in welcher mehrere Softwareanwendungen (6) ausgeführt werden, welche aus aktiven Softwareelementen (7j) gebildet sind, eine Rechenkapazitäts-Steuereinheit (10), wobei die Rechenkapazitäts-Steuereinheit (10) die Fähigkeit besitzt, auf ein Niveau des Paares Spannung-Frequenz der Recheneinheit (3i) einzuwirken, **dadurch gekennzeichnet, dass** das Verfahren mindestens folgende Schritte aufweist:
a) Die Rechenkapazitäts-Steuereinheit (10) empfängt innerhalb einer schätzbaren maximalen Zeit tₘₐₓ, eine Empfangsinformation I_{rfd} von auslösenden Faktoren F_{D} von Laufzeiten E aktiver Softwareelemente (7j),
b) Die Rechenkapazitäts-Steuereinheit (10) empfängt eine Endinformation Iₜ, welche mit den auslösenden Faktoren F_{D} verbunden ist, kommende Laufzeiten E der aktiven Softwareelemente (7j) der Softwareanwendungen (6) und eine Kritikalität dieser Laufzeiten E, wobei jede Laufzeit E als kritisch definiert wird, wenn ein Niveau des Paares Spannung-Frequenz V_{fe} der Recheneinheit (3i) bereits bei Empfang eines auslösenden Faktors F_{D} der Laufzeit E einen Minimalwert Vₘᵢₙ betragen soll,
c) Wenn die Rechenkapazitäts-Steuereinheit (10) eine Angabe zum Verarbeitungsende aller aktiven Softwareelemente (7j) empfängt, c1) testet die Steuereinheit (10), ob eine Zeit zwischen zwei Auslöseinformationen unter Verwendung eines Schwellenwertes Sₜ ausreicht, c2) wenn ja, senkt die Rechenkapazitäts-Steuereinheit (10) das Niveau des Paares Spannung-Frequenz der Recheneinheit (3i),
d) Beim Empfang von auslösenden Faktoren F_{D} der Softwareanwendungen (6) betrachtet die Rechenkapazitäts-Steuereinheit (10) die Kritikalitäten C der Laufzeiten E der aktiven Softwareelemente (7) der Softwareanwendungen (6) und wird die kritischen Softwareanwendungen aktivieren; bei unkritischen Softwareanwendungen erhöht die Rechenkapazitäts-Steuereinheit (10) das Niveau des Paares Spannung-Frequenz der Recheneinheit (3i), und dadurch, dass die Softwareanwendungen eine periodische Laufzeit aufweisen und man eine Zuweisungsanfrage des Paares Spannung-Frequenz um eine Zeit im Voraus stellt, welche mindestens gleich einer Latenz der betreffenden Recheneinheit (3i) zur Durchführung der Änderung ist.

2. Verfahren nach Anspruch 1, **dadurch gekennzeichnet, dass** die Rechenkapazitäts-Steuereinheit die Frequenz unter Berücksichtigung eines maximal erforderlichen Bedarfs an Rechenkapazität moduliert, welcher mit jedem der auslösenden Faktoren der Softwareanwendungen verbunden ist, und einer Vorab-Bewertung der Einhaltung der Laufzeiten der Gesamtanwendung mit diesen Frequenzvariationen.

3. Verfahren nach einem der vorhergehenden Ansprüche, **dadurch gekennzeichnet, dass**, falls keine der Softwareanwendungen in Verarbeitung begriffen ist, die Steuereinheit die Recheneinheiten dem Spannungs-Frequenz-Mindestniveau für die betriebsbedingten Verarbeitungen zuweisen wird.

4. Computerprogramm, welches Anweisungen umfasst, die, wenn das Programm durch einen Computer ausgeführt wird, diesen dazu veranlassen, die Schritte des Verfahrens nach dem Anspruch 1 umzusetzen.

5. Verwendung des Verfahrens nach einem der Ansprüche 1 bis 3 für Mechanismen vom Typ dynamische Spannungs- und Frequenz-Skalierung, DVFS, oder dynamisches Strom-Management, DPM.

## Claims

1. A method for monitoring the level of computing capacity allocated to a hardware platform (2) comprising at least one computing unit (3i) on which one or more software applications (6), composed of active software components (7j), will be executed, a computing capacity controller (10), said computing capacity controller (10) being able to act on a voltage-frequency pair level of said computing unit (3i), **characterised in that** said method has at least the following steps:
a) the computing capacity controller (10) receives within a maximum estimable time tₘₐₓ, a piece of information I_{rfd} of receiving triggering factors F_{D} for deadlines E of active software components (7j),
b) the computing capacity controller (10) receives a piece of termination information Iₜ attached to the triggering factors F_{D}, next deadlines E of the active software components (7j) of the software applications (6) and a criticality of these deadlines E, each deadline E being defined as critical if a voltage-frequency pair level V_{fe} of the computing unit (3i) must be at a minimum value Vₘᵢₙ from the reception of a triggering factor F_{D} of said deadline E,
c) when the computing capacity controller (10) receives an indication of the end of processing of all the active software components (7j), c1) said controller (10) tests whether a time between two pieces of triggering information is sufficient by using a threshold value Sₜ, c2) if so, the computing capacity controller (10) will lower the level of the voltage-frequency pair of the computing unit (3i),
d) when receiving triggering factors F_{D} of the software applications (6), the computing capacity controller (10) will look at the criticalities C of the deadlines E of the active software components (7) of the software applications (6), and will activate the critical software applications, for the non-critical software applications, the computing capacity controller (10) raises the voltage-frequency pair level of the computing unit (3i), and **in that** the software applications have a periodic deadline and **in that** an assignment request for the voltage-frequency pair is made in advance by a time at least equal to a latency of the computing unit (3i) involved for performing said change.

2. The method according to claim 1, **characterised in that** the computing capacity controller modulates the frequency by taking into account a maximum requirement for computing capacity need attached to each of the triggering factors of the software applications and an a priori evaluation of maintaining the deadlines of the overall application with these frequency variations.

3. The method according to either one of the preceding claims, **characterised in that**, in the event that none of the software applications is being processed, the controller will assign the computing units to the minimum voltage-frequency level for the processings specific to the operation.

4. Computer program comprising instructions, which, when said program is executed by a computer, bring this computer to perform the steps of the method of claim 1.

5. Use of the method according to one of claims 1 to 3 with Dynamic Voltage and Frequency Scaling (DVFS) or Dynamic Power Management (DPM) type mechanisms.
